Europäisches Patentamt

European Patent Office

Office européen des brevets

(11) Publication number: **0 429 408 A1**

## (12) EUROPEAN PATENT APPLICATION

(21) Application number: 90830509.7

(22) Date of filing: 08.11.90

(51) Int. Cl.⁵: **B62K 21/26**, B25G 1/10

(30) Priority: 22.11.89 IT 2213589 U

(43) Date of publication of application:
29.05.91 Bulletin 91/22

(84) Designated Contracting States:
**AT BE CH DE FR GB LI NL SE**

(71) Applicant: **CALZATURIFICIO DUEGI S.r.l.**
**Via Fermi, 2/4**
**I-31010 Casella d'Asolo (Treviso)(IT)**

(72) Inventor: **Bigolin, Giuseppe, c/o Calzaturificio**
**Duegi S.r.l.**
**Via Fermi, 2/4**
**I-31010 Casella d'Asolo (Treviso)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) Improved hand grip for motorcycle handle bars and the like.

(57) An improved hand grip for motorcycle handle bars and the like comprises a hand grip body including a recess (2) in which a resilient insert (4) is engaged provided for improving the gripping of an user hand on the hand grip body.

Fig. 1

## BACKGROUND OF THE INVENTION

The present invention relates to an improved hand grip for motorcycle handle bars, baby carriages, suitcases and the like.

As is known, hand grips are frequently used in several fields and, in particular, for handle bars of bicycles and motorcycles.

For such an application, the hand grip must have a suitable mechanical strength and a long lifetime.

Conventional hand grips, however, are affected by some drawbacks, the most severe of which is that they frequently include projecting ribs which can not be easily and firmly gripped by the hand of an user.

In the motorcycle field, in particular, there are already known several hand-grips provided with ridged portions suitable to improve the gripping by the user: however, these ridge portions have a comparatively high hardness and, accordingly, are susceptible to fatigue the user hand.

SUMMARY OF THE INVENTION

Accordingly, the main object of the present invention is to overcome the above mentioned drawbacks by providing a hand grip, in particular for motorcycles, which is so designed and constructed as to improve the gripping by an user hand, while preventing the user hand from fatigueing.

According to one aspect of the present invention, the above mentioned aim, as well as yet other objects which will become more apparent hereinafter, are achieved by an improved hand grip for motorcycle handle bars and the like, characterized in that said hand grip comprises a hand grip body including a recess therein a resilient insert member is engaged said resilient insert member being adapted to improve the gripping properties of said hand grip.

In other words, the subject hand grip, made of any suitable plastic materials, is provided, at the gripping portion thereof, with a recess in which there is housed a soft and resilient material insert designed for absorbing possible impacts and eliminating pressures and frictions against the user hand.

BRIEF DESCRIPTION OF THE DRAWINGS

Further characteristics and advantages of the improved hand grip according to the present invention will become more apparent hereinafter, from the following detailed description of a preferred, through exclusive, embodiment thereof, which is illustrated, by way of an indicative but not limitative example, in the accompanying drawing, where:

Figure 1 is a side view of an improved hand grip provided with a recess for housing therein a soft material insert, according to the present invention,

Figure 2 shows the subject hand grip with a soft and resilient material insert fixedly engaged in the hand grip recess, said resilient insert being fixedly coupled to the hand grip body for example by electrowelding or glueing,

and

Figure 3 shows another embodiment in which the soft insert engaged in the hand grip body slightly projects therefrom.

DESCRIPTION OF THE PREFERRED EMBODIMENT

With reference to the figures of the accompanying drawings, the improved hand grip 1 according to the present invention, comprises, in the hand grip body, a recess 2 which is delimited by a narrow region 3 provided for assuring a perfect perimetrical sealing of a soft insert to be engaged in the mentioned recess 2.

More specifically, this insert 4, preferably made of neoprene, a gel material, a' suitable casing in which air is trapped or any other suitable materials, can be made rigid with the hand grip body, in its recess 2, for example by electrowelding or glueing or by directly injecting this insert into the hand grip body.

In this connection, it should be apparent that the particular shape of the hand grip 1 and recess 2 can be any according to requirements.

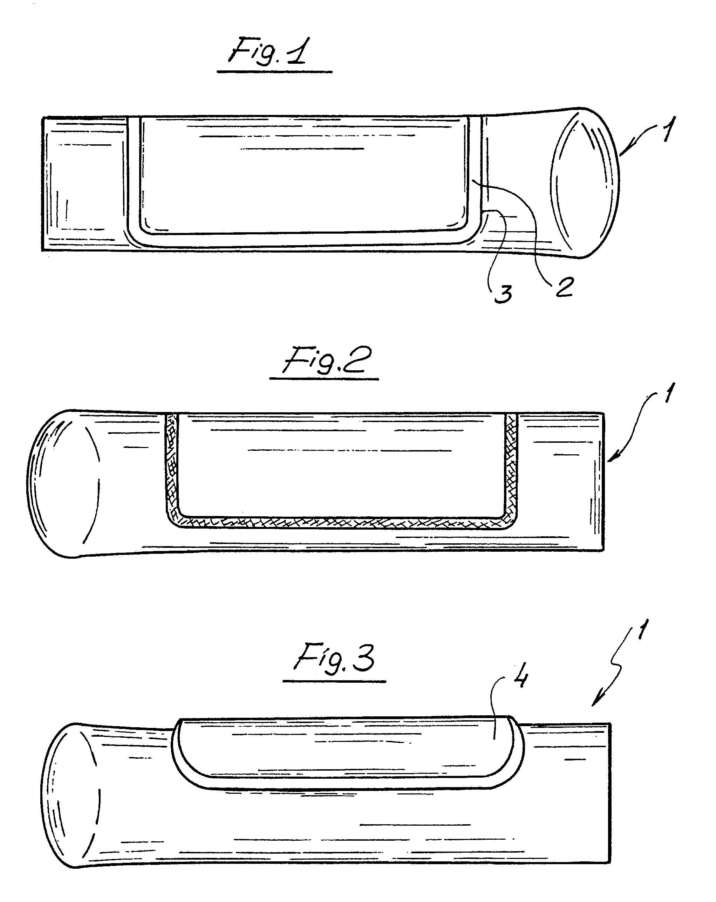

The position of the insert 4 in the hand grip body can be varied, according to the needs, for example as shown in figure 3 in which the insert slightly projects and is turned through about 30°.

While the invention has been disclosed and illustrated with reference to a preferred embodiment thereof, it should be apparent that the disclosed embodiment is susceptible to several modifications and variations all of which will come within the spirit and scope of the appended Claims.

**Claims**

1. An improved hand grip for motorcycle handle bars and the like, characterized in that said hand grip comprises a hand grip body including a recess therein a resilient insert member is engaged said resilient insert member being adapted to improve the gripping properties of said hand grip.

2. A hand grip according to Claim 1, wherein said hand grip is made of a plastic material.

3. A hand grip according to Claim 1, wherein said insert member is fixedly engaged in said recess by electrowelding.

4. A hand grip according to Claim 1, wherein said insert member is fixedly engaged in said recess by glueing.

5. A hand grip according to Claim 1, wherein said insert member is rigidly formed with said hand-grip body by a direct injection method.

6. A hand grip according to Claim 1, wherein said insert member is made of neoprene, a gel material, a casing in which air is entrapped, or any other suitable materials.

Fig.1

Fig.2

Fig.3

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 208 942 (WERA-WERK HERMANN WERNER GMBH) <br> * page 6, line 1 - page 10, line 7; figures 1-6 * <br> — — — | 1,2,4 | B 62 <br> K 21/26 <br> B 25 G 1/10 |
| P,X | EP-A-0 354 840 (3D SA) <br> * column 3, lines 35 - 57; figures 1, 2, 6 * <br> — — — | 1,2 | |
| A | FR-A-2 138 004 (SCHWINN BICYCLE CO.) <br> * the whole document * <br> — — — | 1,2 | |
| A | GB-A-3 489 81 (H.BURTON) <br> * the whole document * <br> — — — — — | 1,2 | |

TECHNICAL FIELDS
SEARCHED (Int. Cl.5)

B 62 K
B 25 G
B 62 B

The present search report has been drawn up for all claims

| Place of search | Date of completion of search | Examiner |
|---|---|---|
| The Hague | 27 February 91 | CZAJKOWSKI A.R. |